# EUROPÄISCHE PATENTANMELDUNG

(11) **EP 2 085 770 A2**
(43) Veröffentlichungstag der Anmeldung: **05.08.2009**
(21) Anmeldenummer: 08021575.9
(22) Anmeldetag: 12.12.2008
(51) Int. Cl.: G01N 21/88, G01N 21/95

(54) **Detektoreinrichtungen sowie Verfahren zur Detektion von Flächendefekten**

(30) Priorität: 31.01.2008 DE 102008007131
(71) Anmelder: RWE Power Aktiengesellschaft, 45128 Essen (DE)
(72) Erfinder: Peeters, Wilhelm, 89355 Gundremmingen (DE); Schiffer, Klaus, 45968 Gladbeck (DE)
(74) Vertreter: Polypatent

(57) **Zusammenfassung**

Die Erfindung betrifft eine Detektoreinrichtung (1) zur optischen Abtastung von verdeckten Flächen, insbesondere von Betonflächen, die einer Sichtkontrolle nicht zugänglich sind. Die Detektoreinrichtung (1) umfasst eine Lichtquelle sowie einen Lichtdetektor in Form eines CCD-Sensors sowie mehrere Lichtleiter, die in einem platten- oder bandförmigen Lichtleitergehäuse (3) angeordnet sind. An dem proximalen Ende des Lichtleitergehäuses (3) sind der Lichtdetektor und die Lichtquelle angeordnet. An einem distalen Ende des Lichtleitergehäuses (3) ist wenigstens eine sich über einen Teil der Breite des Lichtleitergehäuses erstreckende Abtastöffnung vorgesehen. Mit dem als Scannerzunge ausgebildeten Lichtleitergehäuse (3) lassen sich die Begrenzungsflächen schmaler Spalte optisch abtasten und auswerten. Die Erfindung betrifft weiterhin ein Verfahren zur Detektion von Flächendefekten der Begrenzungsflächen von Spalten mit geringer Spaltweite.

## Beschreibung

Die Erfindung betrifft eine Detektoreinrichtung sowie ein Verfahren zur Detektion von Flächendefekten.

Insbesondere bei Kraftwerksbauten aus Stahlbeton besteht häufig das Bedürfnis, Betonflächen im Hinblick auf Flächendefekte zu untersuchen. Häufig sind solche Untersuchungen in Bereichen der Betonfläche gewünscht, die durch ortsfeste Installationen teilweise oder ganz verdeckt sind. Solche Installationen können beispielsweise Aufhängesysteme für Rohrleitungen sein. Die Aufhängesysteme sind üblicherweise mit Dübeln oder sogenannten Hinterschnittankern in Betonwänden gesichert. Eine Voraussetzung dafür, dass die Dübel- bzw. Ankersysteme maximale Tragfähigkeit aufweisen, ist die Unversehrtheit des gebohrten Betons. Fehlbohrungen oder andere Fehlstellen in der Betonoberfläche im Bereich der Bohrungen können u. U. dazu führen, dass die Dübel oder Hinterschnittanker nicht mehr die maximale Tragfähigkeit aufweisen. Zur nachträglichen Überprüfung eines spezifikationsgerechten Einbaus ist es größtenteils unabdingbar, die bereits installierten Aufhängesysteme zu entfernen, um die darunterliegende Betonfläche einer Sichtprüfung zu unterziehen.

Abgesehen von diesem speziellen Problem sind verschiedenste Anwendungen denkbar, bei denen eine Untersuchung von Betonflächen wünschenswert ist, wobei aber die zu untersuchende Fläche einer Sichtprüfung nicht ohne weiteres zugänglich ist.

Der Erfindung liegt daher die Aufgabe zugrunde, eine Detektoreinrichtung zur optischen Abtastung von Begrenzungsflächen von Spalten mit geringer Spaltweite, insbesondere zur Abtastung von verdeckten Flächen an Installations- und / oder Montagewänden sowie ein Verfahren zur Detektion von Flächendefekten der Begrenzungsflächen von Spalten mit geringer Spaltweite bereitzustellen.

Die Aufgabe wird gelöst durch eine Detektoreinrichtung zur optischen Abtastung von Begrenzungsflächen von Spalten mit geringer Spaltweite, insbesondere zur Abtastung von verdeckten Flächen an Installations- und / oder Montagewänden, umfassend wenigstens eine Lichtquelle, wenigstens einen Lichtdetektor sowie Lichtleiter, die in einem platten- oder bandförmigen Lichtleitergehäuse angeordnet sind, wobei an einem proximalen Ende des Lichtleitergehäuses der Lichtdetektor und die Lichtquelle angeordnet sind und an einem distalen Ende des Lichtleitergehäuses wenigstens eine sich über die Breite des Lichtleitergehäuses erstreckende Abtastöffnung vorgesehen ist.

Eine solche Detektoreinrichtung gemäß der Erfindung ist vorzugsweise als Handgerät mit einem Handgriff ausgebildet. Das flache platten- oder bandförmige Lichtleitergehäuse kann mit seinem von der Lichtquelle und dem Lichtdetektor abliegenden Ende in verhältnismäßig flache Spalte mit geringer Spaltweite eingeschoben werden. Über eine verhältnismäßig breite schlitzförmige Abtastöffnung, die sich vorzugsweise auf einer der Breitseiten des im Querschnitt rechteckförmigen, platten- oder bandförmigen Lichtleitergehäuses erstreckt, kann die zu inspizierende Fläche abgetastet werden.

Die Detektoreinrichtung gemäß der Erfindung besitzt zweckmäßigerweise ein Lichtleitergehäuse, dass als zungenförmiges oder plattenförmiges Element ausgebildet ist. An dessen abliegenden oder distalen Ende befindet sich zweckmäßigerweise die Abtastöffnung, an dessen proximalen oder dem Benutzer zugewandten Ende sind zweckmäßigerweise ein Handgriff mit einem Gerätegehäuse vorgesehen. In dem Handgriff können die Lichtquellen, ein Lichtdetektor beispielsweise in Form einer Digitalkamera und eine Auswerteeinrichtung angeordnet sein.

Besonders zweckmäßig ist es, wenn wenigstens zwei sich jeweils über wenigstens eine Teillänge des Lichtleitergehäuses erstreckende Lichtleiteranordnungen vorgesehen sind, wobei eine erste Lichtleiteranordnung als Beleuchtungslichtleiter und eine zweite Lichtleiteranordnung als Detektionslichtleiter vorgesehen sind. Über die Beleuchtungslichtleiter kann ein Abtastlicht an die Abtastöffnung gebracht werden. Das von der zu inspizierenden Fläche reflektierte Licht gelangt über die Abtastöffnung und den Detektionslichtleiter an den Lichtdetektor.

Das Lichtleitergehäuse kann als mit Ausnahme der Abtastöffnungen vollständig geschlossenes verhältnismäßig flaches, rechteckiges Gehäuse ausgebildet sein. Dieses kann beispielsweise als etwa 2 mm starke, federelastische Zunge ausgebildet sein, die verhältnismäßig einfach von Hand zwischen sogenannte Dübelplatten und eine zu untersuchende Betonschicht geschoben werden kann.

Selbstverständlich können in dem Lichtleitergehäuse auch mehrere Abtastöffnungen derart vorgesehen sein, dass mehrere Betonabschnitte gleichzeitig abtastbar sind.

Bei einer bevorzugten Variante der Detektoreinrichtung sind als Lichtleiter optische Fasern vorgesehen.

Die Fasern einer Lichtleiteranordnung können beispielsweise zu einem Flachband nebeneinander angeordnet sein. Diese können beispielsweise auf einer Metallfolie als Träger verklebt worden sein und mit Stahlfolien, die die Skannerzunge bzw. das Lichtleitergehäuse bilden, zu einem Verbund zusammengefügt worden sein.

Bei einer bevorzugten Variante der Detektoreinrichtung kann vorgesehen sein, dass die Lichtleiter jeweils an ihrem distalen Ende stirnseitig etwa 45° bezogen auf deren Erstreckungsebene abgeschrägt sind. In diesem Fall können die Stirnflächen der Lichtleiter beispielsweise total reflektierend ausgebildet sein. Diese könnten beispielsweise mit einer Spiegelfolie stirnseitig verschlossen sein, so dass das von der Lichtquelle emittierte Abtastlicht am stirnseitigen distalen Ende der Beleuchtungslichtleiter um etwa 90° abgelenkt wird, so dass dieses aus der Abtastöffnung auf die zu inspizierende Fläche auftreffen kann.

In diesem Falle ist es zweckmäßig, wenn die als Beleuchtungslichtleiter ausgebildeten Lichtleiter auf der von der Abtastöffnung abgewandten Seite des Lichtleitergehäuses angeordnet sind.

Die Stirnflächen der Lichtleiter können in diesem Bereich in Richtung auf das proximale Ende des Lichtleitergehäuses abgeschrägt sein.

Die vorstehend genannte Aufgabe wird weiterhin gelöst durch ein Verfahren zur Detektion von Flächendefekten an Begrenzungsflächen von Spalten mit geringer Spaltweite, die einer Sichtprüfung nicht ohne weiteres zugänglich sind, unter Verwendung einer optischen Detektionseinrichtung, insbesondere unter Verwendung einer Detektionseinrichtung der vorstehend beschriebenen Art, wobei sich das Verfahren dadurch auszeichnet, dass wenigstens eine Spaltbegrenzungsfläche mittels einer Lichtquelle abgetastet wird, dass von der abgetasteten Fläche zurückreflektierte Licht erfasst und mittels einer Auswerteeinrichtung im Hinblick auf die Lichtintensität des reflektierten Lichts ausgewertet wird.

Das von der Lichtquelle emittierte Licht trifft auf die zu inspizierende Wandoberfläche auf und wird dort diffus reflektiert. Trifft das von der Lichtquelle abgestrahlte Licht auf einen Flächendefekt in der zu inspizierenden Wandfläche, beispielsweise auf eine Bohrung oder auf eine größere Unebenheit, so weist die dort vorgesehene Wandoberfläche ein anderes Reflektionsverhalten auf. Durch den geänderten Reflektionsgrad und die geänderte Reflektionsrichtung wird eine deutlich geringere Lichtintensität zurückreflektiert. Auf diese Art und Weise lassen sich besonders einfach Flächendefekte an Oberflächen erfassen, die einer Sichtprüfung nicht ohne weiteres zugänglich sind.

Vorzugsweise wird für die Lichtintensität (Luminanz) des reflektierten Lichts ein Referenzwert festgelegt und es erfolgt ein Vergleich der gemessenen Lichtintensität mit dem Referenzwert, wobei der Rückschluss auf Flächendefekte aus dem Vergleich gezogen wird.

Die Erfindung wird nachstehend anhand eines in den Zeichnungen beschriebenen Ausführungsbeipiels erläutert.

### Es zeigen:

- Figur 1: eine schematische Ansicht der Detektionseinrichtung gemäß der Erfindung,
- Figur 2: eine schematische Ansicht der im Einsatz befindlichen Detektoreinrichtung,
- Figur 3: einen Schnitt durch das vordere Ende des Lichtleitergehäuses der Detektoreinrichtung gemäß der Erfindung und

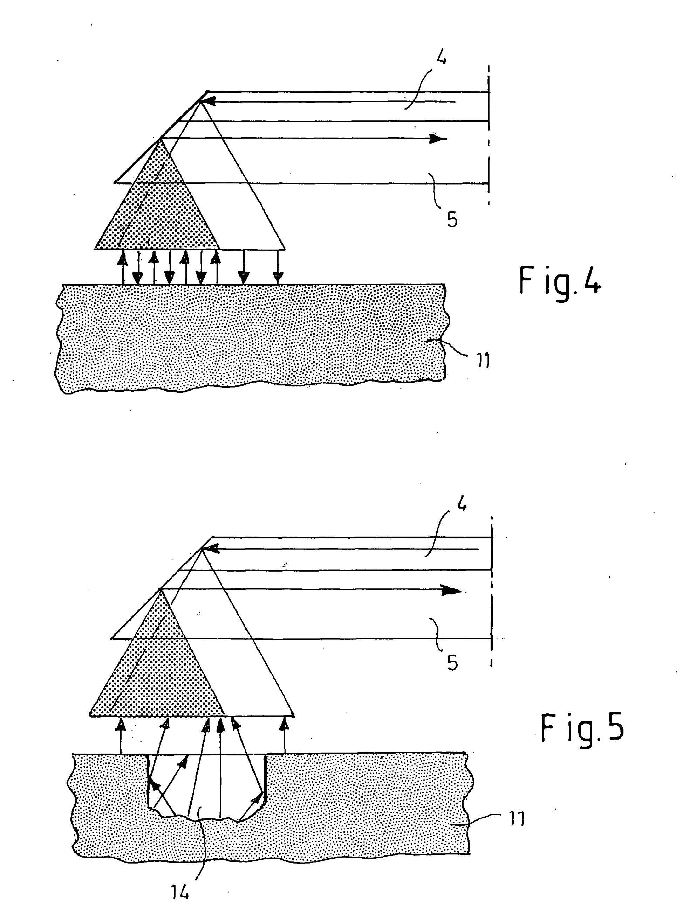

- Figuren 4 und 5: schematische Ansichten, welche die Arbeitsweise der erfindungsgemäßen Detektoreinrichtung veranschaulichen.

Die Detektoreinrichtung 1 gemäß der Erfindung, wie sie in den beigefügten Zeichnungen dargestellt ist, ist als tragbarer Handscanner ausgebildet. Diese umfasst ein Scannergehäuse 2 mit einer darin angeordneten Lichtquelle, einem Lichtdetektor sowie eine Auswerteelektronik. Als Lichtquelle kommt beispielsweise eine LED-Lichtquelle in Betracht. Der Lichtdetektor kann beispielsweise als CCD-Sensor, CMOS-Sensor oder dergleichen ausgebildet sein.

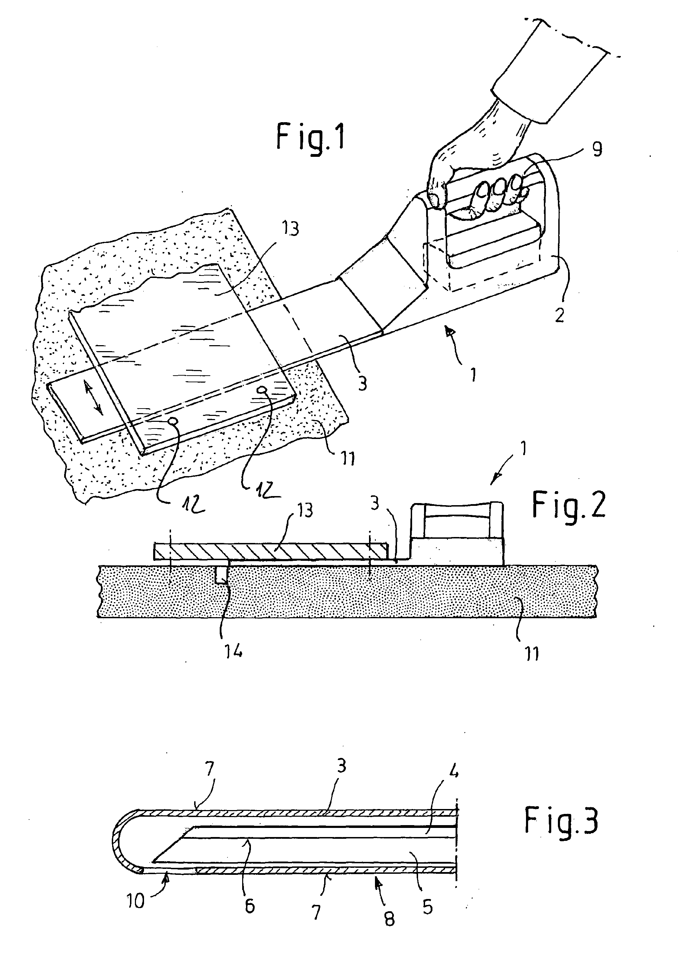

Die Lichtquelle ist an innerhalb eines Lichtleitergehäuses angeordnete Lichtleiter angeschlossen. Das Lichtleitergehäuse 3 der Detektionseinrichtung 1 gemäß der Erfindung ist als flache, rechteckige Scannerzunge ausgebildet, die beispielsweise eine Dicke von etwa 2 mm, eine Breite von etwa 100 mm und eine Länge von etwa 350 mm aufweisen kann. Innerhalb des platten- bzw. palettenförmigen Lichtleitergehäuses erstreckt sich eine erste Beleuchtungslichtleiteranordnung 4 und eine zweite Detektionslichtleiteranordnung 5. Sowohl die Beleuchtungslichtleiteranordnung 4 als auch die Detektionslichtleiteranordnung 5 bestehen aus nebeneinander angeordneten optischen Fasern, die jeweils auf einer Seite einer dazwischen angeordneten Trägerfolie 6 aufgebracht sind. Die als Flachbänder ausgebildeten Lichtleiteranordnungen sind zwischen Stahlfolien 7 angeordnet, die das Lichtleitergehäuse bilden und sind mit diesen zu einer flexiblen und dünnen Scannerzunge verklebt. An dem proximalen, dem Scannergehäuse 2 zugewandten Ende des Lichtleitergehäuses 3 wird über die Lichtquelle Licht in die Beleuchtungslichtleiteranordnung 4 eingekoppelt. Das Licht tritt, wie dies aus Figur 3 ersichtlich ist, an dem distalen Ende des Lichtleitergehäuses 3, d. h. an dem von dem Scannergehäuse 2 abliegenden Ende des Lichtleitergehäuses 3 aus diesem aus. Hierzu ist auf der unteren Breitseite 8 des Lichtleitergehäuses 3, das ist diejenige Seite des Lichtleitergehäuses 3, die einem an dem Scannergehäuse 2 vorgesehenen Handgriff 9 abgewandt ist, eine sich fast über die gesamte Breite des Lichtleitergehäuses 3 erstreckende Abtastöffnung 10 vorgesehen.

Die Beleuchtungslichtleiteranordnung umfasst etwa vierhundert nebeneinander angeordnete optische Fasern mit einer Dicke von etwa 250µm, die in Gebrauchslage der Detektionseinrichtung 1 darunter angeordnete Detektionslichtleiteranordnung 5 umfasst etwa zweihundert nebeneinander angeordnete optische Fasern mit einer Dicke von etwa 500 µm.

Wie dies insbesondere der Figur 3 zu entnehmen ist, erstrecken sich die Lichtleiteranordnungen in Bezug auf deren Längsachse etwa bis in das letzte Drittel der Abtastöffnung 10. Die stirnseitigen Enden der optischen Faser sind in Richtung auf das Scannergehäuse 2 bzw. in Richtung auf das proximale Ende des Lichtleitergehäuses 3 in einem Winkel von etwa 45° abgeschrägt. Darüber hinaus sind die Stirnseiten der optischen Fasern total reflektierend ausgebildet, so dass das durch die Beleuchtungslichtleiteranordnung 4 geleitete Licht in einem Winkel von etwa 90° aus dem Lichtleitergehäuse 3 ausgekoppelt wird und aus der Abtastöffnung 10 in Gebrauchslage nach unten austritt. Von der zu inspizierenden Betonfläche wird das Detektionslicht reflektiert und in die Detektionslichtleiteranordnung 5 wieder eingekoppelt. Über die Detektionslichtleiteranordnung 5 gelangt das reflektierte Licht wiederum zu einem in dem Scannergehäuse 2 angeordneten CCD-Sensor.

In einer ebenfalls in dem Scannergehäuse 2 angeordneten Auswerteinrichtung ist ein Referenzwert für die Reflektionsintensität einer Abtastung einer unversehrten Oberfläche hinterlegt. Das reflektierte Licht wird mit dem in der Auswerteeinheit hinterlegten Referenzwert verglichen. Die Auswertung der von dem Sensor erfassten Bilder kann über ein Datenverarbeitungsprogramm erfolgen. Beispielsweise kann dies derart erfolgen, dass Bilder in einem Lab-Farbraum aufgenommen werden und anschließend der Luminanzkanal des Lab-Farbraums ausgewertet wird, wobei unterschiedliche Reflektionsintensitäten auf einer Anzeigeeinrichtung in unterschiedlichen Farben dargestellt werden können, so dass Flächendefekte einer zu inspizierenden Fläche farbig graphisch dargestellt werden können.

Um eine entsprechende Ein- und Auskopplung des Beleuchtungslichts und des reflektierten Lichts in der gewünschten "Blickrichtung" des Lichtleitergehäuses zu erzeugen, sind, wie vorstehend bereits erwähnt, die stirnseitigen distalen Enden der optischen Faser total reflektierend ausgebildet. Dies kann beispielsweise durch eine verspiegelte Folie erzielt werden, die auf die Stirnflächen der optischen Fasern aufgebracht ist.

Figur 2 veranschaulicht den praktischen Gebrauch der Detektoreinrichtung 1. Mit 11 ist eine Betonwand bezeichnet, in die verschiedene andeutungsweise dargestellte Dübelbohrungen 12 eingebracht wurden. Über nur andeutungsweise dargestellte Dübel ist eine Montageplatte 13 auf der Betonwand 11 verankert. Mit 14 ist eine durch die Montageplatte 13 verdeckte zu detektierende Fehlbohrung oder Fehlstelle bezeichnet. Zwischen der Montageplatte 13 und der Betonwand 11 erstreckt sich ein etwa 2 mm breiter Spalt, in den das platten- oder bandförmige Lichleitergehäuse 3 der Detektionseinrichtung 1 einschiebbar ist. Durch entsprechende Führung der Detektionseinrichtung 1 kann mittels der etwa 10 cm breiten und etwa 1 cm hohen Abtastöffnung 10 die bei der in Figur 2 dargestellten Lage der Detektoreinrichtung 1 der Betonwand 11 zugekehrt ist, die Betonfläche zeilen- und / oder spaltenweise oder auch unsystematisch abgetastet werden. Wird die Abtastöffnung 10 über die in Figur 2 dargestellte Fehlbohrung 14 geschoben, so ändert sich die Lichtintensität bzw. Luminanz des reflektierten Lichts drastisch. Es wird weniger als an anderen Stellen zurückreflektiert, so dass sich die Fehlbohrung mit dem CCD-Sensor bzw. mit der CCD-Kamera im Scannergehäuse 2 optisch auflösen lässt.

### Bezugszeichenliste

- 1: Detektoreinrichtung
- 2: Scannergehäuse
- 3: Lichtleitergehäuse
- 4: Beleuchtungslichtleiteranordnung
- 5: Detektionslichtleiteranordnung
- 6: Trägerfolie
- 7: Stahlfolien
- 8: untere Breitseite des Lichtleitergehäuses
- 9: Handgriff
- 10: Abtastöffnung
- 11: Betonwand
- 12: Dübelbohrungen
- 13: Montageplatte
- 14: Fehlbohrungen

## Patentansprüche

1. Detektoreinrichtung (1) zur optischen Abtastung von Begrenzungsflächen von Spalten mit geringer Spaltweite, insbesondere zur Abtastung von verdeckten Flächen an Installations- und / oder Montagewänden, umfassend wenigsten eine Lichtquelle, wenigstens einen Lichtdetektor sowie Lichtleiter, die in einem platten- und / oder bandförmigen Lichtleitergehäuse (3) angeordnet sind, wobei an einem proximalen Ende des Lichtleitergehäuses (3) der Lichtdetektor und die Lichtquelle angeordnet sind und an einem distalen Ende des Lichtleitergehäuses (3) wenigstens eine über wenigstens einen Teil der Breite des Lichtleitergehäuses (3) erstreckende Abtastöffnung (10) vorgesehen ist.

2. Detektoreinrichtung nach Anspruch 1, **dadurch gekennzeichnet, dass** sich die Abtastöffnung (10) auf einer der Breitseiten des im Querschnitt rechteckförmigen, platten- oder bandförmigen Lichtleitergehäuses (3) erstreckt,

3. Detektoreinrichtung nach einem der Ansprüche 1 oder 2, **dadurch gekennzeichnet, dass** wenigstens zwei sich jeweils über wenigstens eine Teillänge des Lichtleitergehäuses (3) erstreckende Lichtleiteranordnungen (4, 5) vorgesehen sind, wobei eine erste Lichtleiteranordnung (4) als Beleuchtungslichtleiter und eine zweite Lichtleiteranordnung (5) als Detektionslichtleiter vorgesehen ist.

4. Detekoreinrichtung nach einem der Ansprüche 1 bis 3, **dadurch gekennzeichnet, dass** als Lichtleiter optische Fasern vorgesehen sind.

5. Detektoreinrichtung nach Anspruch 4, **dadurch gekennzeichnet, dass** die Fasern wenigstens einer Lichtleiteranordnung zu einem Flachband, vorzugsweise auf einem Folienträger nebeneinander angeordnet sind.

6. Detektoreinrichtung nach einem der Ansprüche 1 bis 5, **dadurch gekennzeichnet, dass** die Lichtleiter an ihrem distalen Ende stirnseitig jeweils etwa 45° bezogen auf deren Erstreckungsebene abgeschrägt sind.

7. Detektoreinrichtung nach einem der Ansprüche 1 bis 6, **dadurch gekennzeichnet, dass** die distalen Stirnflächen der Lichtleiter total reflektierend ausgebildet sind.

8. Verfahren zur Detektion von Flächendefekten der Begrenzungsflächen von Spalten mit geringer Spaltweite, die einer Sichtprüfung nicht ohne weiteres zugänglich sind, unter Verwendung einer optischen Detektionseinrichtung, insbesondere unter Verwendung einer Detektionseinrichtung nach einem der vorstehenden Ansprüche, **dadurch gekennzeichnet, dass** wenigstens eine Spaltbegrenzungsfläche mittels einer Lichtquelle abgetastet wird, dass das von der abgetasteten Fläche zurückreflektierte Licht erfasst und mittels einer Auswerteeinrichtung im Hinblick auf die Lichtintensität des reflektierten Lichts ausgewertet wird.

9. Verfahren nach Anspruch 8, **dadurch gekennzeichnet, dass** das für die Lichtintensität (Luminanz) des reflektierten Lichts ein Referenzwert festgelegt wird und das ein Vergleich der gemessenen Lichtintensität mit dem Referenzwert erfolgt, wobei der Rückschluss auf Flächendefekte aus dem Vergleich gezogen wird.
